# EUROPÄISCHE PATENTSCHRIFT

(11) **EP 0 412 051 B1**
(45) Veröffentlichungstag und Bekanntmachung des Hinweises auf die Patenterteilung: **22.09.1993**
(21) Anmeldenummer: 90810511.7
(22) Anmeldetag: 05.07.1990
(51) Int. Cl.: B60K 1/04, B60S 5/00

(54) **Einrichtung zum Auswechseln und Laden von Energiespeichern von Transportfahrzeugen**
Device for exchanging and loading of energy accumulators for transportation vehicles
Dispositif d'échange et chargement d'accumulateurs d'énergie de véhicules de transport

(30) Priorität: 31.07.1989 CH 2833/89
(43) Veröffentlichungstag der Anmeldung: 06.02.1991
(73) Patentinhaber: MASCHINENFABRIK RIETER AG, CH-8406 Winterthur (CH)
(72) Erfinder: Meyer, Urs, Dr., CH-8172 Niederglatt (CH); Gartenmann, Niklaus, CH-8400 Winterthur (CH); Ulrich, Hanspeter, CH-8132 Egg (CH)
(74) Vertreter: Bruderer, Werner

(56) Entgegenhaltungen:
- EP-A- 0 218 059
- DE-A- 2 410 102
- DE-A- 2 444 711
- DE-A- 2 535 454
- DE-B- 2 114 962
- FR-A- 2 270 195

## Beschreibung

Die Erfindung betrifft eine Einrichtung zum Auswechseln und Laden von Energiespeichern von Transportfahrzeugen mit einer Wechselposition für das Transportfahrzeug, einer Verschiebeeinrichtung für die Energiespeicher und einer Ladestation mit mehreren Abstellplätzen für Energiespeicher.

Einrichtungen zum Wechseln von Energiespeichern sind in verschiedenen Ausführungen bekannt, beispielsweise aus DE 24 10 102 C3 für das Wechseln von Akkumulatorbatterien. Bei dieser bekannten Einrichtung befindet sich das batteriegetriebene Transportfahrzeug auf einer eigenen Fahrspur in einer Wechselposition. Neben der Fahrspur sind in einem Halbkreis mehrere Batterie-Abstell- und -Ladeplätze angeordnet. Im Zentrum dieser Abstell- und Ladeplätze befindet sich ein Wechselwagen, welcher sowohl auf das Transportfahrzeug wie auch auf die Ladeplätze ausrichtbar und mittels einer Drehscheibe um eine Achse verschwenkbar ist. Auf dem Wechselwagen befindet sich eine Transporteinrichtung, mittels welcher Batterien aus dem Transportfahrzeug entnommen und nach dem Verschwenken und Ausrichten des Wechselwagens auf eine bestimmte Ladestation an diese übergeben werden können. Die beschriebene Einrichtung benötigt relativ viel Platz, und beim Wechselvorgang der Batterien vom Transportfahrzeug in die Ladestation sind mehrere Ausricht-, Positionier- und Transportvorgänge notwendig. Zudem ist an jeder Seite der Fahrspur, bzw. des Transportfahrzeuges, eine entsprechende Wechsel- und Ladeeinrichtung notwendig, da die aufgeladene Batterie von einer Seite in das Transportfahrzeug eingeschoben, und damit die entladene Batterie auf der anderen Seite aus dem Fahrzeug ausgestossen und auf den Wechselwagen gebracht wird. Diese Anordnung ist verhältnismässig teuer und infolge der verschiedenen Antriebe und Bewegungsvorgänge relativ störungsanfällig. Der grosse Platzbedarf verursacht auch hohe Investitionskosten.

In der DE 24 44 711 A1 ist eine Batteriewechselvorrichtung beschrieben, bei welcher die Batterieboxen für die Aufladung der Batterie parallel zur Fahrspur in Reihe angeordnet sind. Zwischen den Batterieboxen und der Fahrspur, bzw. dem Transportfahrzeug, befindet sich eine verfahrbare Batteriewechselvorrichtung, mittels welcher die Batterien aus dem Fahrzeug entnommen und in die Batterieboxen übergeben werden können. Trotz der hier möglichen einseitigen Bedienung des Fahrzeuges sind noch relativ viele Handhabungsvorgänge notwendig, und die Batteriewechselvorrichtung muss sowohl auf das Fahrzeug wie auch auf die Batterieboxen ausgerichtet und genau positioniert werden. Dadurch, dass die Batteriewechselvorrichtung mehrere Stationen anfahren muss, wird die Störungsanfälligkeit erhöht.

DE 21 14 962 B2 zeigt eine weitere bekannte Wechselstation für Batterien von Elektrofahrzeugen gemäß dem Oberbegriff des Anspruchs 1. Dabei ist beidseits einer Abstellposition für das Fahrzeug je ein Turm zur Stapelung mehrerer Batterien angeordnet. Im Turm sind die Batterien auf Paletten angeordnet, welche mit Hilfe eines Paternosterförderers vertikal versetzbar sind. Zum Batteriewechsel wird das Fahrzeug mit Positioniereinrichtungen in der Wechselposition positioniert. Dann wird im ersten Turm eine geladene Batterie in die Wechselposition gebracht, und im zweiten Turm muss genau gegenüber eine leere Palette positioniert sein. Mit einer Stossvorrichtung wird die geladene Batterie aus dem ersten Turm auf einer Seite in das Fahrzeug verschoben und dadurch die entladene Batterie auf der anderen Seite des Fahrzeuges in den zweiten Turm geschoben. Bei dieser Wechselvorrichtung müssen zwei Seiten des Fahrzeuges zugänglich sein und es sind zwei Batterietürme notwendig. Dies erfordert einen grossen Aufwand für die Einrichtungen. Zudem ist eine genaue Positionierung der Paletten in den beiden Türmen und des Fahrzeuges zwischen den Türmen notwendig, da sonst die Durchschubeinrichtung blockiert oder das Fahrzeug beschädigt wird. Die Anlage ist ebenfalls verhältnismässig teuer und infolge der verschiedenen Antriebe und Bewegungsvorgänge relativ störungsanfällig.

Es ist Aufgabe der vorliegenden Erfindung, eine Einrichtung zu schaffen, welche einen geringen Platzbedarf aufweist, die Positionierungsvorgänge beim Batteriewechsel auf ein Minimum reduziert, einen vollständig automatischen Ablauf des Wechsel- und Ladevorganges für die Energiespeicher zulässt, und mit welcher kurze Wechselzeiten für einen Wechsel eines Energiespeichers erreicht werden.

Diese Aufgabe wird durch die im kennzeichnenden Teil des Patentanspruches 1 definierten Merkmale gelöst. Vorteilhafte Weiterbildungen der Erfindung ergeben sich nach den Merkmalen der abhängigen Patentansprüche.

Bei der erfindungsgemässen Einrichtung ist kein zusätzliches Wechselfahrzeug nötig, und die Bewegungs- und Positioniervorgänge werden somit wesentlich reduziert. Das in der Ladestation angeordnete Rundmagazin enthält mindestens einen leeren Abstellplatz und mehrere Abstellplätze mit geladenen sowie sich in Aufladung befindlichen Energiespeichern. Die Uebergabe von entladenen Energiespeichern in die Ladestation erfolgt direkt vom Transportfahrzeug in den leeren Abstellplatz der Ladestation. Umgekehrt wird nach einem Verschwenken des Rundmagazines, bzw. der Ladestation, um ein bestimmtes Winkelmass ein geladener Energiespeicher direkt von der Ladestation in das Transportfahrzeug übergeben. Da die Ladestation genau positioniert ist, muss nur das Transportfahrzeug in die richtige Wechselposition gebracht werden, und der Wechsel eines Energiespeichers kann dann ohne weitere Hilfsfahrzeuge erfolgen.

Durch die Anordnung der in der Ladestation notwendigen einzelnen Einrichtungen in scheibenförmigen Teilbereichen wird eine sehr kompakte Bauweise erreicht. Die scheibenförmigen Teilbereiche sind über- oder untereinander angeordnet, so dass der Durchmesser der Anlage reduziert wird. Diese Anordnung gewährleistet eine bessere Zugänglichkeit der einzelnen Einrichtungen und einen einfacheren Austausch von defekten Teileinrichtungen in der Ladestation. Abhängig von den Bedürfnissen und der konstruktiven Grundgestaltung sind alle scheibenförmigen Teilbereiche gemeinsam schwenkbar oder ein Teilbereich ist fest. Da die Verschiebeeinrichtung für die Energiespeicher im Bereiche zwischen der Achse und der Peripherie der Ladestation angeordnet ist, benötigt auch diese keine zusätzliche Grundfläche und ist in die kompakte Ladestation integriert. Die kompakte bevorzugte Ausführung des Energiespeichers mit der automatischen Kupplungs- und Verriegelungseinrichtung ermöglicht eine weitere Vereinfachung und Automatisierung des Wechselvorganges, wobei die Positionierung der Energiespeicher sowohl im Transportfahrzeug wie auch in der Ladestation mit einer grossen Zuverlässigkeit gewährleistet ist.

Im folgenden wird die Erfindung anhand von Ausführungsbeispielen unter Bezugnahme auf die beiliegenden Zeichnungen näher erläutert. Es zeigen:
- Fig. 1: eine Seitenansicht einer erfindungsgemässen Einrichtung mit einem Transportfahrzeug und einer Ladestation, wobei diese teilweise im Schnitt dargestellt sind.
- Fig. 2: eine Aufsicht auf die Einrichtung gemäss Figur 1 mit einem Transportfahrzeug und dem unteren Teilbereich einer Ladestation.
- Fig. 3: eine Seitenansicht der Einrichtung mit einem drehbaren und feststehenden Teilbereich in vereinfachter Darstellung.

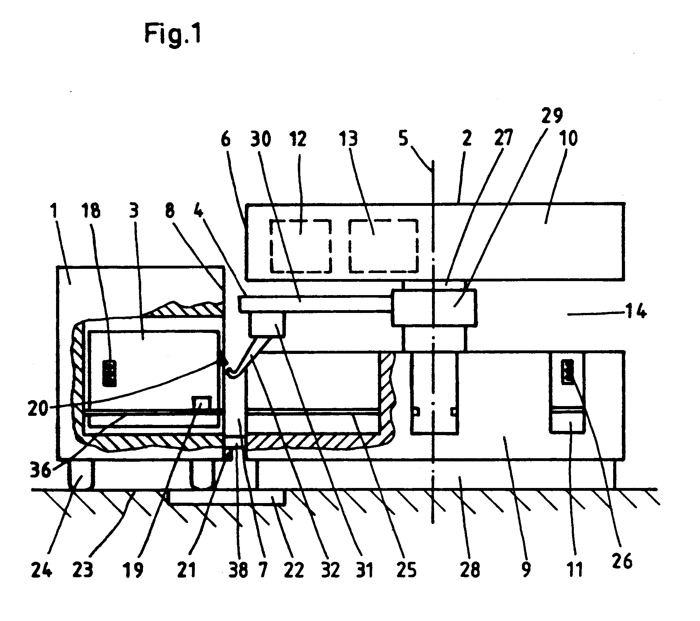

Figur 1 zeigt ein Transportfahrzeug 1, welches sich auf einer Fahrspur 23 bewegt, und zwar automatisch, d.h. fahrerlos oder durch einen Fahrer gesteuert. Die Antriebsenergie wird dem Transportfahrzeug 1 aus einem Energiespeicher 2 zugeführt, im dargestellten Beispiel über elektrische Batterien. Der Energiespeicher 3 kann auch Brennstoffzellen oder andere Elemente, mittels welcher Energie gespeichert werden kann, umfassen. Neben der Fahrspur 23 des Transportfahrzeuges 1 ist eine Ladestation 2 angeordnet. Diese Ladestation 2 enthält ein zylinderförmiges Rundmagazin 9, welches um eine zentrale Achse 5 verschwenkbar ist. Die Peripherie 6 des Rundmagazines 9 schliesst möglichst nahe an die Aussenfläche 8 des Transportfahrzeuges 1 an, welche gegen die Ladestation 2 gerichtet ist. Zwischen Peripherie 6, bzw. Mantelfläche der Ladestation 2 oder des Rundmagazines 9 und der Aussenfläche 8 des Transportfahrzeuges 1 ist ein Zwischenraum 7 vorhanden, welcher allfällige Positionstoleranzen des Transportfahrzeuges 1 ausgleicht und Manipulationsvorgänge ermöglicht. Das Transportfahrzeug 1 ist mit Sensoren 21 ausgerüstet, mittels welcher die genaue Wechselposition gegenüber der Ladestation 2 festgestellt, und das Transportfahrzeug 1 in dieser Position festgelegt wird. Zusätzlich ist in der Bodenfläche eine mechanische Positioniereinrichtung 22 vorhanden, welche das Transportfahrzeug während des Wechselvorganges genau positioniert und in der notwendigen Lage festhält. Die mechanische Positioniereinrichtung 22 wirkt in bekannter Weise auf die Räder 24 des Transportfahrzeuges 1 ein oder verfügt über andere bekannte Positioniereinrichtungen. Im weiteren ist eine Kontaktanordnung 38 vorhanden, über welche das Transportfahrzeug 1 während des Wechselvorganges mit Notenergie versorgt werden kann.

Die Ladestation 2 besteht aus zwei scheibenförmigen Teilbereichen 9, 10, welche übereinander angeordnet und schwenkbar sind. Der untere Teilbereich ist das Rundmagazin 9 und weist mehrere Abstellplätze 11 für Energiespeicher 3 auf. Jeder der Abstellplätze 11 ist mit entsprechenden Führungseinrichtungen 25 für die Energiespeicher, einer Kupplungseinrichtung 26 für die Verbindung der elektrischen Speiseleitungen mit den Batterien und einer Verriegelungseinrichtung für das Festhalten des Energiespeichers 3 im Abstellplatz 11 ausgestattet. Der zweite zylinderförmige Teilbereich ist der Geräteträger 10 in der Ladestation 2, welcher über dem ersten Teilbereich, bzw. dem Rundmagazin 9 angeordnet ist. Der Geräteträger 10 enthält die Ladegeräte 12, welche für die Zufuhr der elektrischen Energie zu den Batterien und die Steuerung des Ladevorganges notwendig sind. Im weiteren sind in diesem zweiten Teilbereich, bzw. Geräteträger 10 der Ladestation 2 Zusatzeinrichtungen 13 vorhanden, beispielsweise die Positionssteuerung für die Ladestation 2 oder die Steuerung für die Verschiebeeinrichtung 4. Die beiden zylinderförmigen Teilbereiche 9 und 10 der Ladestation 2 sind in der Achse 5 gelagert und gemeinsam um diese verschwenkbar. Durch den Kern 27 der Ladestation 2 sind die Verbindungs- und Steuerleitungen zwischen den beiden Teilbereichen 9 und 10 geführt und auch die Zuführleitungen für die elektrische Energie werden durch diesen Kern 27 geführt. Die ganze Ladestation 2 ist auf einem Sockel 28 abgestützt.

Zwischen den beiden Teilbereichen 9 und 10 der Ladestation 2 ist ein Zwischenraum 14 vorhanden, welcher der Aufnahme der Verschiebeeinrichtung 4 dient. Diese Verschiebeeinrichtung 4 ist stationär und dreht sich nicht mit der Ladestation 2 um die Achse 5. Sie ist über ein Lager 29 am Kern 27 der Ladestation 2 abgestützt und wird mittels zusätzlicher, nicht dargestellter Mittel, in der Wechselposition fixiert. Die Verschiebeeinrichtung 4 besteht aus einer Schiene 30, an welcher ein Transportwagen 31 gelagert ist. Der Transportwagen 31 ist entlang der Schiene 30 verschiebbar und mit einem dafür geeigneten Antrieb ausgestattet. Am Transportwagen 32 ist eine Greifeinrichtung 32 angeordnet, mittels welcher der Energiespeicher 3 entriegelt und zwischen dem Transportfahrzeug 1 und der Ladestation 2 verschoben werden kann.

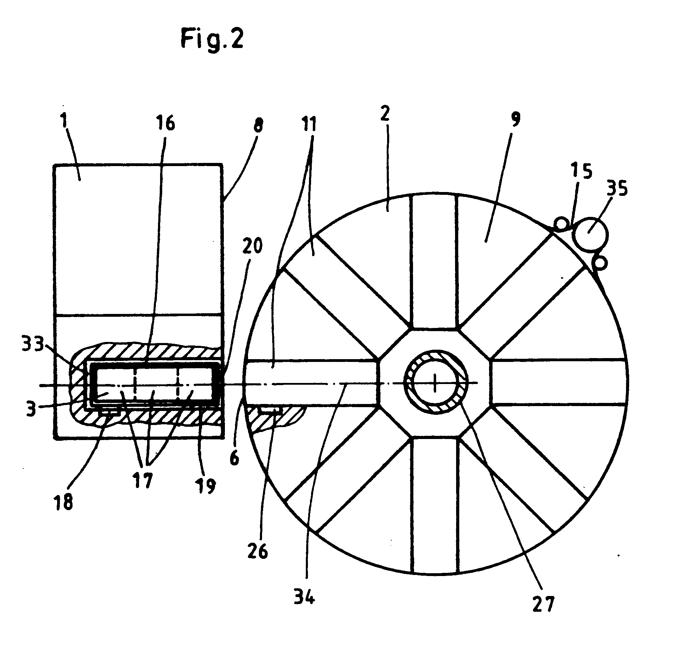

Aus Figur 2 ist ersichtlich, dass die Ladestation 2 über acht Abstellplätze 11 für Energiespeicher 3 verfügt. Einer dieser Abstellplätze 11 ist jeweils leer, und die anderen sieben sind mit vollständig aufgeladenen oder sich in Aufladung befindlichen Energiespeichern 3 mit elektrischen Batterien bestückt. Das Transportfahrzeug 1 befindet sich in der Wechselposition, so dass sich der Batteriekasten 33 des Transportfahrzeuges 1 und der leere Abstellplatz 11 in der Ladestation 2 auf der Wechselachse 34 gegenüber liegen. Die Positionierung des leeren Abstellplatzes 11 der Ladestation 2 auf die Wechselachse 34 erfolgt über einen Antrieb 35 und einem Zahnriemen 15. Die Enden des Zahnriemens 15 sind an der Ladestation 2 befestigt, wodurch die Ladestation 2 nicht um ganze 360° um die Achse 5 geschwenkt werden kann. Dadurch wird verhindert, dass die im Kern 27 angeordneten Leitungen verdreht und übermässig belastet werden. Die Bauelemente in den beiden Teilbereichen 9, 10 der Ladestation 2 sind über flexible Leitungen miteinander verbunden, und es werden keine Schleifkontakte benötigt. Die Befestigungspunkte der Enden des Zahnriemens 15 sind so gewählt, dass trotzdem jeder der Abstellplätze 11 an die Position der Wechselachse 34 gebracht werden kann.

Der Energiespeicher 3 ist als Kompakteinheit ausgebildet und besteht aus einem Rahmen 16, in welchem drei einzelne Energiespeicherelemente 17 in der Form von Batterien angeordnet sind. Die Anzahl der im Rahmen 16 angeordneten Speicherelemente 17 ist abhängig von der Art der Speicherelemente und von der gewünschten Spannung und Speicherkapazität. Im Rahmen 16 sind die notwendigen elektrischen Leitungen für die Verbindung der Speicherelemente 17 angeordnet und zu einer Kupplungsstelle 18 geführt. Diese Kupplungsstelle 18 besteht aus einer automatisch betätigbaren elektrischen Verbindung, über welche der Energiespeicher 3 mit elektrischen Leitungen im Transportfahrzeug 1 verbunden wird, wobei diese Leitungen zu nicht dargestellten Antriebselementen und zur Steuerung führen. Der Rahmen 16 wird im Batteriekasten 33 mittels Führungen 36 geführt und gehalten. Am Rahmen 16 ist zusätzlich eine Verriegelungseinrichtung 19 vorhanden, welche den Energiespeicher 3 im Batteriekasten 33 fixiert. An der Frontfläche des Rahmens 16 des Energiespeichers 3 befindet sich eine Kupplungseinrichtung 20, in welche die Greifeinrichtung 32 der Verschiebeeinrichtung 4 eingreift. Diese Kupplungseinrichtung 20 ist in bekannter, nicht dargestellter Weise so ausgestattet, dass sie die Verriegelungseinrichtung 19 betätigt. Wenn die Verriegelungseinrichtung 19 gelöst ist, kann der Energiespeicher 3 mittels des Transportwagens 31 von den Führungen 36 im Transportfahrzeug 1 auf die Führungseinrichtungen 25 im leeren Abstellplatz 11 der Ladestation 2 verschoben werden. Nach dem Verschieben des Energiespeichers 3 vom Transportfahrzeug 1 in die Ladestation 2 wird der Energiespeicher 3 im Abstellplatz 11 verriegelt, und die elektrische Verbindung über die Kupplungseinrichtung 26 hergestellt. Mittels des Antriebes 35 wird das Rundmagazin 9 der Ladestation 2 soweit verschwenkt, dass ein vollständig geladener Energiespeicher 3 mit den entsprechenden Speicherelementen 17 in der Form von elektrischen Batterien in die Position der Wechselachse 34 gebracht wird. Mittels der Verschiebeeinrichtung 4 und der am Transportwagen 31 befestigten Greifeinrichtung 32 wird an diesem geladenen Energiespeicher 3 die Verriegelungseinrichtung 19 gelöst. Die elektrische Verbindung zu der Kontaktstelle 18 erfolgt über Schleifkontakte, welche durch den Verschiebevorgang automatisch aus- und eingekuppelt werden. Damit kann der voll aufgeladene Energiespeicher 3 in das Transportfahrzeug 1 geschoben und in den Batteriekasten 33 eingesetzt werden. Hier wird durch Lösen der Greifeinrichtung 32 die Verriegelungseinrichtung 19 betätigt und gleichzeitig die elektrische Verbindung über die Kupplungsstelle 18 wieder hergestellt.

Da bei der erfindungsgemässen Einrichtung keine Zwischenfahrzeuge zwischen der Ladestation 2 und dem Transportfahrzeug 1 benötigt werden, ist der Verschiebevorgang sehr einfach. Die Energiespeicher 3 müssen nur zwischen zwei Positionen bewegt und nicht auf eine Zwischenposition ausgerichtet werden. Im weiteren kann die Ladestation 2 sehr kompakt ausgebildet und möglichst nahe an die Fahrspur 23 gesetzt werden. Dadurch ergibt sich ein geringerer Bedarf an Bodenfläche und eine bessere Ausnutzung der räumlichen Gegebenheiten. Die Verteilung der einzelnen Elemente der Ladestation 2 auf mehrere scheibenförmige Teilbereiche 9, 10 ergibt eine zusätzliche Reduktion des Flächenbedarfes und gewährleistet zudem eine bessere Zugänglichkeit der einzelnen Elemente wie der Ladegeräte 12 und der Zusatzeinrichtungen 13. Allfällig defekte Energiespeicher 3 können an einer beliebigen Position an der Peripherie 6 der Ladestation 2 mittels entsprechender Hilfseinrichtungen aus einem der Abstellplätze 11 entnommen und durch einen funktionsfähigen Energiespeicher 3 ersetzt werden. Dies ist dadurch möglich, dass die Energiespeicher 3 nach aussen aus der Ladestation 2, bzw. ihren Abstellplätzen 11 ausgefahren werden, und dies durch die strahlenförmige Anordnung auf dem Rundmagazin nicht nur in der Position der Wechselachse 34 möglich ist. Bei entsprechender Ausbildung der Verschiebeeinrichtung 4 kann das Ausstossen von Energiespeichern 3 auch in einer anderen Position als derjenigen der Wechselachse 34 erfolgen.

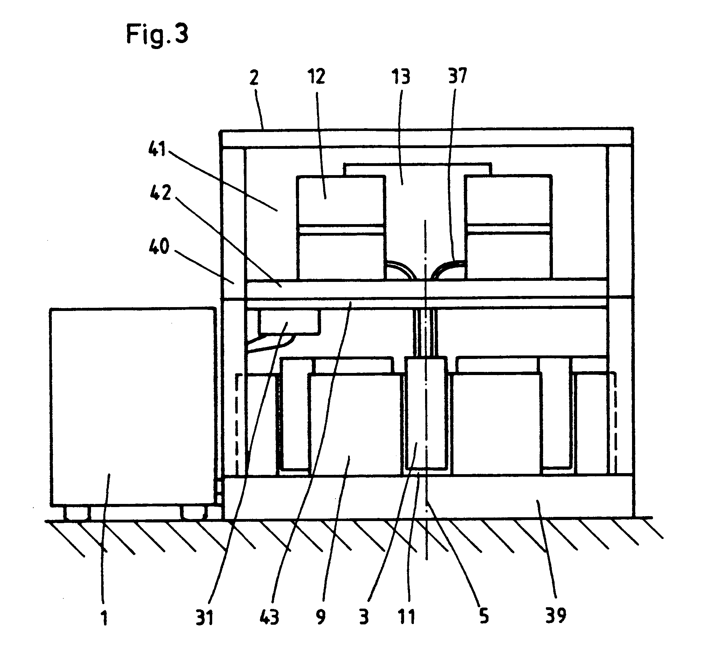

Figur 3 zeigt eine zweite Ausführungsform der Ladestation 2. Die Ladestation 2 weist ebenfalls einen ersten scheibenförmigen Teilbereich in der Form eines drehbaren Rundmagazines 9 auf. Das Rundmagazin 9 ist um die Achse 5 schwenkbar und liegt auf einem Sockel 39 auf. Der Sockel 39 ist Bestandteil einer Rahmenstruktur 40, welche alle Elemente der Ladestation 2 trägt. Diese Rahmenstruktur 40 umfasst auch den zweiten Teilbereich, bzw. den Geräteträger 41, welcher in diesem Beispiel jedoch fest angeordnet ist. Auf einer Grundplatte 42 sind die Ladegeräte 12 und Zusatzeinrichtungen 13 angeordnet. Die Ladegeräte 12 sind über elektrische Leiter 37 in der Form von flexiblen Kabeln mit den Abstellplätzen 11, bzw. den Energiespeichern 3 im Rundmagazin 9 verbunden. Unterhalb der Grundplatte 42 ist ein Träger 43 befestigt, an welchem der Transportwagen 31 verschiebbar angeordnet ist. Die entsprechenden Antriebe sind nicht dargestellt. Das Transportfahrzeug 1 befindet sich in der Wechselposition, in welcher ein entladener Energiespeicher 3 in die Ladestation 2 verfahren werden kann.

Auch diese Ausführungsform ermöglicht eine sehr kompakte und raumsparende Anordnung der Ladestation 2. Das Rundmagazin 9 hat einen Schwenkbereich, welcher kleiner als 360° ist, und diese Schwenkbewegungen können durch die Kabel 37 aufgenommen werden, wodurch keine Schleifkontakte notwendig sind. Der stationäre Teilbereich, bzw. Geräteträger 41 ist jederzeit zugänglich, so dass die Teile 12, 13 überwacht und gewartet werden können. Gleichzeitig ist der drehbare Teilbereich 9 der Ladestation 2 geschützt.

## Patentansprüche

1. Einrichtung zum Auswechseln und Laden von Energiespeichern (3) von Transportfahrzeugen (1), mit einer Wechselposition für das Transportfahrzeug (1), einer Verschiebeeinrichtung (4) für die Energiespeicher (3) und einer Ladestation (2) mit mehreren Abstellplätzen (11) für Energiespeicher (3), wobei die Ladestation (2) mit einer Aussenfläche an eine Aussenfläche (8) des Transportfahrzeuges (1) anschliesst, dadurch gekennzeichnet, dass in der Ladestation (2) ein Rundmagazin (9) angeordnet und um eine zentrale, vertikale Achse (5) schwenkbar ist, dieses Rundmagazin (9) die Abstellplätze (11) für die Energiespeicher (3) enthält, die Peripherie (6) der Ladestation (2) und des Rundmagazines (9) direkt oder mit einem Zwischenraum (7) an die Aussenfläche (8) des Transportfahrzeuges (1) anschliesst und die Verschiebeeinrichtung (4) für die Energiespeicher (3) im Bereiche zwischen der Achse (5) des Rundmagazines (9) und der Peripherie (6) der Ladestation (2) angeordnet ist.

2. Einrichtung nach Patentanspruch 1, dadurch gekennzeichnet, dass die Ladestation (2) aus zwei scheibenförmigen, übereinander angeordneten Teilbereichen (9, 10, bzw. 41) besteht, wobei der erste Teilbereich aus dem Rundmagazin (9) besteht und die Abstellplätze (11) für die Energiespeicher (3) enthält und der zweite Teilbereich aus einem Geräteträger (10, 41) besteht und die Ladegeräte (12) und Zusatzeinrichtungen (13) enthält.

3. Einrichtung nach Patentanspruch 2, dadurch gekennzeichnet, dass der Geräteträger (10), welcher den zweiten Teilbereich der Ladestation (2) bildet gemeinsam mit dem Rundmagazin (9) um die zentrale Achse (5) schwenkbar ist.

4. Einrichtung nach Patentanspruch 2 oder 3, dadurch gekennzeichnet, dass zwischen den beiden Teilbereichen (9, 10, bzw. 41) der Ladestation (2) ein Zwischenraum (14) besteht, und in diesem Zwischenraum (14) die Verschiebeeinrichtung (4) angeordnet ist.

5. Einrichtung nach einem der Patentansprüche 1 bis 4, dadurch gekennzeichnet, dass das Rundmagazin (9) der Ladestation (2) über ein Band (15) oder eine Kette angetrieben ist und der Schwenkbereich des Magazines um die Achse (5) kleiner ist als 360 Grad.

6. Einrichtung nach einem der Patentansprüche 2 bis 5, dadurch gekennzeichnet, dass jedes Ladegerät (12) mittels elektrischer Leiter (37) einem bestimmten Abstellplatz (11) fest zugeordnet ist.

7. Einrichtung nach einem der Patentansprüche 1 bis 6, dadurch gekennzeichnet, dass jeder der Energiespeicher (3) als Kompakteinheit ausgebildet ist und diese Kompakteinheit einen Rahmen (16), mehrere in diesem Rahmen angeordnete Energiespeicherelemente (17), eine zentrale Kupplungsstelle (18) für die Energieleiter, eine Verriegelungseinrichtung (19) und eine Kupplungseinrichtung (20) für die Verschiebeeinrichtung (4) aufweist.

8. Einrichtung nach Patentanspruch 6, dadurch gekennzeichnet, dass die an der Kompakteinheit angeordnete Kupplungseinrichtung (20) für die Verschiebeeinrichtung (4) mit der Verriegelungsvorrichtung (19) verbunden ist und als Führung für die Verschiebeeinrichtung (4) ausgebildet ist.

9. Einrichtung nach einem der Patentansprüche 1 bis 8, dadurch gekennzeichnet, dass das Transportfahrzeug (1) mit einem Hilfsspeicher zur Versorgung der Fahrzeugsteuerung mit Notenergie ausgestattet ist.

10. Einrichtung nach einem der Patentansprüche 1 bis 8, dadurch gekennzeichnet, dass das Transportfahrzeug (1) eine Kontaktanordnung (38) zur Einspeisung von elektrischer Energie aufweist.

11. Einrichtung nach einem der Patentansprüche 1 bis 10, dadurch gekennzeichnet, dass das Transportfahrzeug (1) Sensoren (21) zum Anfahren der Wechselposition aufweist und zwischen dem Transportfahrzeug (1) und dem Rundmagazin der Ladestation (2) eine mechanische Positioniereinrichtung (22) angeordnet ist.

12. Einrichtung nach einem der Patentansprüche 1 bis 11, dadurch gekennzeichnet, dass die Energiespeicher (3) aus wartungsfreien elektrischen Batterien oder Akkumulatoren bestehen.

## Claims

1. A device for changing and charging the energy storage means (3) of transport vehicles (1), comprising a change position for the transport vehicle (1), a means (4) for shifting the energy storage means (3), and a charging station (2), comprising a number of spaces (11) for receiving energy storage means (3), an outer surface of the charging station (2) being adjacent an outer surface (8) of the transport vehicle (1), characterised in that a round magazine (9) is disposed in the charging station (2) and is pivotable around a central vertical axis (5), the round magazine (9) contains the spaces (11) for the energy storage means (3), the periphery (6) of the charging station (2) and the round magazine (9) is adjacent the outer surface (8) of the vehicle (1), either directly or via a gap (7), and the means (4) for shifting the energy storage means (3) is disposed in the region between the axis (5) of the round magazine (9) and the periphery (6) of the charging station (2).

2. A device according to claim 1, characterised in that the station (2) comprises two disc-shaped superposed compartments (9, 10 & 41), the first compartment comprises the round magazine (9) and contains the spaces (11) for the energy storage means (3), and the second compartment comprises an apparatus holder (10, 41) and contains the charging devices (12) and additional equipment (13).

3. A device according to claim 2, characterised in that the apparatus holder (10) constituting the second compartment of the charging station (2) is pivotable together with the round magazine (9) around the central axis (5).

4. A device according to claim 2 or 3, characterised in that a gap (14) is left between the two compartments (9, 10 or 41) of the charging station (2) and the shifting means (4) is disposed in the gap (14).

5. A device according to any of claims 1 to 4, characterised in that the round magazine (9) in the charging station (2) is driven by a belt (15) or chain and the pivoting range of the magazine around the axis (5) is less than 360°.

6. A device according to any of claims 2 to 5, characterised in that each charging device (12) is permanently connected by electric conductors (37) to a particular space (11).

7. A device according to any of claims 1 to 6, characterised in that each energy storage means (3) is a compact unit, and the compact unit contains a frame (16), a number of energy storage elements (17) disposed in the frame, a central coupling place (18) for the energy conductors, a locking device (19) and a device (20) for coupling the shifting means (4).

8. A device according to claim 6, characterised in that the coupling device (20) for the shifting means (4) on the compact unit is connected to the locking device (19) and constructed as a guide for the shifting means (4).

9. A device according to any of claims 1 to 8, characterised in that the transport vehicle (1) has an auxiliary storage means for supplying the vehicle steering system with emergency energy.

10. A device according to any of claims 1 to 8, characterised in that the transport vehicle (1) comprises a contact arrangement (38) for supplying electric energy.

11. A device according to any of claims 1 to 10, characterised in that the transport vehicle (1) has sensors (21) for moving up to the change position and a mechanical positioning device (22) is disposed between the transport vehicle (1) and the round magazine in the charging station (2).

12. A device according to any of claims 1 to 11, characterised in that the energy storage means (3) comprises maintenance-free electric batteries or accumulators.

## Revendications

1. Dispositif pour l'échange et la charge d'accumulateurs d'énergie (3) de véhicules de transport (1), comportant une position d'échange pour le véhicule de transport (1), un dispositif de déplacement (4) pour l'accumulateur d'énergie (3) et un poste de charge (2) avec plusieurs places de stockage (11) pour accumulateur d'énergie (3), dans lequel le poste de charge (2) est contigu par une face externe d'une face externe (8) du véhicule de transport (1), caractérisé en ce qu'un magasin circulaire (9) est agencé dans le poste de charge (2) et peut être pivoté autour d'un axe central vertical (5), en ce que ce magasin circulaire (9) contient les places de stockage (11) pour les accumulateurs d'énergie (3), les périphéries (6) du poste de charge (2) et du magasin circulaire (9) étant contiguës, soit directement soit avec un espace intercalaire (7), de la face externe (8) du véhicule de transport (1), et en ce que le dispositif de déplacement (4) pour les accumulateurs d'énergie (3) est agencé dans la zone entre l'axe (5) du magasin circulaire (9) et la périphérie (6) du poste de charge (2).

2. Dispositif suivant la revendication 1, caractérisé en ce que le poste de charge (2) est constitué de deux zones partielles (9, 10 ou 41) en forme de disque et agencées l'une au-dessus de l'autre, la première zone partielle étant constituée du magasin circulaire (9) et contenant les places de stockage (11) pour les accumulateurs d'énergie (3), la seconde zone partielle étant constituée d'un support d'appareil (10, 41) et contenant les appareils de charge (12) et des dispositifs auxiliaires (13).

3. Dispositif suivant la revendication 2, caractérisé en ce que le support d'appareil (10) qui forme la seconde zone partielle du poste de charge (2) peut pivoter ensemble avec le magasin circulaire (9) autour de l'axe central (5).

4. Dispositif suivant l'une ou l'autre des revendications 2 et 3, caractérisé en ce qu'il y a entre les deux zones partielles (9, 10, ou 41) du poste de charge (2) un espace intercalaire (14) et en ce que dans cet espace intercalaire (14) est agencé le dispositif de déplacement (4).

5. Dispositif suivant l'une quelconque des revendications 1 à 4, caractérisé en ce que le magasin circulaire (9) du poste de charge (2) est entraîné par une bande (15) ou par une chaîne et en ce que la plage de pivotement du magasin autour de l'axe (5) est inférieure à 360 degrés.

6. Dispositif suivant l'une quelconque des revendications 2 à 5, caractérisé en ce que chaque appareil de charge (12) est adjoint fixement au moyen de conducteurs électriques (37) à une place de stockage déterminée (11).

7. Dispositif suivant l'une quelconque des revendications 1 à 6, caractérisé en ce que chaque accumulateur d'énergie (3) est réalisé sous la forme d'un ensemble compact et en ce que cet ensemble compact présente un châssis (16), plusieurs éléments d'accumulateur d'énergie (17) agencés dans ce châssis, un endroit de couplage central (18) pour les conducteurs d'énergie, un dispositif de blocage (19) et un dispositif de couplage (20) pour le dispositif de déplacement (4).

8. Dispositif suivant la revendication 6, caractérisé en ce que le dispositif de couplage (20), pour le dispositif de déplacement (4), agencé sur l'ensemble compact est raccordé au dispositif de blocage (19) et est réalisé sous la forme d'un guidage pour le dispositif de déplacement (4).

9. Dispositif suivant l'une quelconque des revendications 1 à 8, caractérisé en ce que le véhicule de transport (1) est équipé d'un accumulateur auxiliaire pour l'alimentation de la commande du véhicule en énergie de secours.

10. Dispositif suivant l'une quelconque des revendications 1 à 8, caractérisé en ce que le véhicule de transport (1) présente un agencement de contact (38) pour l'alimentation en énergie électrique.

11. Dispositif suivant l'une quelconque des revendications 1 à 10, caractérisé en ce que le véhicule de transport (1) présente des détecteurs (21) pour la mise en marche de la position d'échange et en ce qu'un dispositif de positionnement mécanique (22) est agencé entre le véhicule de transport (1) et le magasin circulaire du poste de charge (2).

12. Dispositif suivant l'une quelconque des revendications 1 à 11, caractérisé en ce que les accumulateurs d'énergie (3) consistent en des batteries ou accumulateurs électriques sans entretien.
